# EUROPÄISCHE PATENTSCHRIFT

(11) **EP 2 879 897 B1**
(45) Veröffentlichungstag und Bekanntmachung des Hinweises auf die Patenterteilung: **19.08.2020**
(21) Anmeldenummer: 13730545.4
(22) Anmeldetag: 19.06.2013
(51) Int. Cl.: B60L 3/00, B60L 3/04

(54) **VERFAHREN ZUR DEAKTIVIERUNG EINES HOCHSPANNUNGSSYSTEMS EINES KRAFTFAHRZEUGS**
METHOD FOR DEACTIVATING A HIGH VOLTAGE SYSTEM OF A MOTOR VEHICLE
PROCÉDÉ PERMETTANT DE DÉSACTIVER UN SYSTÈME HAUTE TENSION D'UN VÉHICULE AUTOMOBILE

(30) Priorität: 28.07.2012 DE 102012015059
(43) Veröffentlichungstag der Anmeldung: 10.06.2015
(73) Patentinhaber: Volkswagen Aktiengesellschaft, 38440 Wolfsburg (DE)
(72) Erfinder: LACHMUND, Uwe, 13053 Berlin (DE); HÄNSCH, Ronny, 38531 Rötgesbüttel (DE); QUENTMEIER, Stefan, 38159 Vechelde (DE)
(86) Internationale Anmeldenummer: PCT/EP2013/062724
(87) Internationale Veröffentlichungsnummer: WO 2014/019760

(56) Entgegenhaltungen:
- WO-A1-2006/022061
- KR-A- 20120 012 662
- US-A- 5 565 711
- US-A- 5 793 121

## Beschreibung

Bei Kraftfahrzeugen mit elektrifiziertem oder teilelektrifiziertem Antriebsstrang (BEV: battery electric vehicle; HEV: hybrid electric vehicle; PHEV: plug-in hybrid electric vehicle) werden der elektrische Antriebsmotor sowie andere Komponenten, wie insbesondere ein elektrisch angetriebener Klimakompressor, mit vergleichsweise hoher elektrischer Spannung von teilweise mehreren hundert Volt betrieben. Die mit Hochspannung betriebenen Komponenten bilden mit der Hochspannungsquelle und weiteren Elementen (z.B. Leistungselektronik, Ladegerät) ein Hochspannungssystem, das auch als Traktionsnetz bezeichnet wird. Neben dem Traktionsnetz weisen elektrifizierte Kraftfahrzeuge regelmäßig noch ein zweites elektrisches System auf, das im wesentlichen dem Bordnetz eines konventionellen Kraftfahrzeuges entspricht und folglich mit relativ niedriger Spannung (insbesondere 12 V oder 24 V) betrieben wird.

Im Kundendienst muss das Traktionsnetz vor Arbeiten an diesem deaktiviert werden, um zu vermeiden, dass das Wartungspersonal durch Berührung mit unter hoher Spannung stehenden Teilen des Traktionsnetzes gefährdet wird. Ein solches Deaktivieren erfolgt in drei Schritten: Zunächst wird eine Spannungsfreiheit des Traktionsnetzes hergestellt, dann wird das Traktionsnetz gegen ein unbeabsichtigtes oder missbräuchliches Wiedereinschalten gesichert und schließlich wird die Spannungsfreiheit noch positiv festgestellt.

Derzeit erfolgt die Herstellung der Spannungsfreiheit zum einen mittels eines sogenannten "Hochvolt-Service Disconnect" (HV-SD), bei dem es sich prinzipiell um einen Stecker handelt, der das Traktionsnetz direkt unterbricht, beispielsweise in dem eine Brücke oder eine Sicherung des Traktionsnetzes manuell entfernt wird. Weiterhin kann auch ein sogenanntes "Niedervolt-Service Disconnect" (LV-SD) vorgesehen sein, das eine Schütze des Traktionsnetzes in Folge einer direkten Unterbrechung ihrer Spannungsversorgung öffnet.

Bei den bekannten Verfahren erfolgt ein Sichern gegen Wiedereinschalten auf einfache Weise, indem der HV-SD weggeschlossen oder der LV-SD abgeschlossen wird. Zusätzlich kann vorgesehen sein, dass der HV-SD und/oder der LV-SD durch verriegelbare Attrappen (sogenannte "Dummies") ersetzt werden, so dass die unzugänglich gemachten SD nicht durch andere ersetzt werden können.

Das Feststellen der Spannungsfreiheit als dritter und letzter Schritt des dreistufigen Deaktivierungsprozesses erfolgt durch eine Spannungsmessung an festgelegten Messpunkten.

Sofern das Traktionsnetz reaktiviert werden soll, wird der HV-SD bzw. der LV-SD wieder eingesetzt.

Das bekannte Verfahren zur Deaktivierung und Reaktivierung eines Traktionsnetzes eines Kraftfahrzeuges weist den Nachteil auf, dass es nicht wirklich sicher ist.

Die Handlungen "Entfernen des Service-Disconnect" und "Ersetzen des Service-Disconnect" durch einen Dummy gehören zwar regelmäßig zu vorgeschriebenen Prozessschritten im Rahmen des Kundendienstes, die durch das Wartungspersonal protokolliert werden müssen, es gibt jedoch keine Maßnahme, die sicherstellt, dass eine Reaktivierung des Traktionsnetzes erst dann durchgeführt wird, wenn dies im Rahmen der geführten Fehlersuche angewiesen wird. Ein Ersetzen eines Dummys durch den entsprechenden Service-Disconnect führt bei den bekannten Systemen sofort zu einer Reaktivierung des Traktionsnetzes. Sollte dies fahrlässig oder auch vorsätzlich zu früh erfolgen, d.h. vor der vollständigen Herstellung der Berührsicherheit, ist jede am Fahrzeug arbeitende Person gefährdet, einen gegebenenfalls tödlichen Stromschlag zu erleiden.

Aus der DE 197 10 416 A1 ist ein Hochspannungssteckverbinder bekannt, der bei der elektrischen Verbindung einer Hochspannungsquelle mit den damit gespeisten Komponenten, wie insbesondere einem elektrischen Antriebsmotor, eines elektrifizierten Kraftfahrzeuges zum Einsatz kommen soll. Der Hochspannungssteckverbinder weist neben Kontaktelementen, an denen im Betrieb des Traktionsnetzes Hochspannung anliegt, zusätzlich noch einen Überwachungsschalter auf, der mit einer Steuereinheit verbunden ist. Eine Betätigung des Überwachungsschalters, die bei einem Lösen des Steckverbinders von einem komplementären Gegensteckverbinder erfolgt, führt zu einer Deaktivierung der Hochspannungsquelle durch die Steuereinheit. Dadurch soll vermieden werden, dass an den dann frei zugänglichen Kontakten des Steckverbinders weiterhin eine Hochspannung anliegt.

Aus der WO 2006/022061 A1 ist ein Kraftfahrzeug bekannt, das dazu ausgebildet ist, im Falle eines Unfalls ein Hochspannungssystem zu unterbrechen. Hierzu sind ein Airbag-Steuergerät und eine Hochspannungsversorgungs-Steuereinheit vorgesehen, wobei das Airbag-Steuergerät ein Unterbrechungssignal und ein Sicherungssignal ausgibt. Die Hochspannungsversorgungs-Steuereinheit ist zum Empfang des Unterbrechungssignals und des Sicherungssignals ausgebildet und gibt auf deren Empfang ein Unterbrechungs-Bestimmungssignal aus, um Hauptrelais elektrisch leitend oder geöffnet zu schalten.

Aus der US 5,793,121 A ist ein Stromunterbrecher zum Erfassen einer unsicheren Betriebsbedingung und zum Unterbrechen eines elektrischen Schaltkreises bekannt. Zum Erfassen der unsicheren Betriebsbedingung ist ein Sensor vorgesehen, wobei es sich bei der unsicheren Betriebsbedingung um eine elektrische Überlastung, einen Kraftfahrzeugüberschlag oder einen Kraftfahrzeugunfall handeln kann.

Aus der US 5,565,711 A ist eine Antriebsenergiekontrollvorrichtung für ein Elektrofahrzeug bekannt. Die Antriebsenergiekontrollvorrichtung weist einen Hauptschalter zwischen der Energiequelle und einem Lasttreiber sowie eine Mehrzahl von Nebenschaltern auf, die zwischen ausgewählten Batterieelementen angeordnet sind. Mit der Antriebsenergiekontrollvorrichtung kann im Fall einer unfallbedingt zerbrochenen Schutzabdeckung die Gefahr von elektrischen Stromschlägen verringert werden.

Aus der KR 2012 0012662 A ist ein Notfallkontrollverfahren eines Elektrofahrzeugs bekannt, bei welchem ein elektrisches Hochspannungssystem mit Hilfe von zwei unterschiedlichen Steuerungseinheiten unterbrochen werden kann.

Der Erfindung lag die Aufgabe zugrunde, ein verbessertes Verfahren zur De- und Reaktivierung eines Hochspannungssystems eines Kraftfahrzeugs anzugeben. Insbesondere lag der Erfindung die Aufgabe zugrunde, die Wartung eines Hochspannungssystems eines Kraftfahrzeugs einfacher und/oder sicherer zu machen.

Diese Aufgabe wird durch ein Verfahren gemäß dem unabhängigen Patentanspruch 1 gelöst. Vorteilhafte Ausgestaltungen des erfindungsgemäßen Verfahrens sind Gegenstand der abhängigen Patentansprüche und/oder ergeben sich aus der nachfolgenden Beschreibung der Erfindung.

Der Erfindung liegt der Gedanke zugrunde, die Wartung eines Hochspannungssystems eines Kraftfahrzeugs einfacher und auch sicherer zu machen, indem die manuellen Handlungen, die im Rahmen der De- -sowie der Reaktivierung vorzunehmen sind, so weit wie möglich reduziert werden und ersatzweise durch automatisierte Verfahrensschritte ersetzt werden. Um hierbei eine ausreichende Prozesssicherheit zu erzielen, ist weiterhin vorgesehen, die automatisierten Prozessschritte soweit erforderlich oder sinnvoll redundant vorzunehmen.

Im weitesten Sinne betrifft die Erfindung demnach ein Verfahren zur Deaktivierung eines elektrischen Hochspannungssystems eines Kraftfahrzeugs zur Durchführung von Wartungsarbeiten, mit den Schritten:
- Richten einer ersten Anforderung zum Unterbrechen des Hochspannungssystems an ein erstes Steuersystem;
- Richten einer zweiten Anforderung zum Unterbrechen des Hochspannungssystems an ein zweites Steuersystem;
- automatisches Unterbrechen des Hochspannungssystems durch mindestens eines der Steuersysteme, wobei das erste Steuersystem eine Motorsteuerung und das zweite Steuersystem ein Batteriemanagementsystem des Kraftfahrzeugs ist, und wobei das Richten der zweiten Anforderung innerhalb eines definierten Zeitraums nach dem Richten der ersten Anforderung erfolgen muss, um zu dem automatischen Unterbrechen des Hochspannungssystems zu führen.

Dadurch, dass die zwei Anforderungen zur automatischen Unterbrechung des Hochspannungssystems innerhalb eines definierten Zeitraums (z.B. innerhalb von 30 Sekunden) erfolgen müssen, um zu dem automatischen Unterbrechen des Hochspannungssystems zu führen, kann zusätzlich die Sicherheit erhöht werden.

Als "Hochspannung" wird erfindungsgemäß eine elektrische Spannung verstanden, die ≥ 60 V bei Gleichspannung und/oder ≥ 30 V bei Wechselspannung beträgt und insbesondere auch deutlich darüber liegen, beispielsweise 300 V oder 400 V betragen kann.

Unter "Spannungsfreiheit" wird erfindungsgemäß eine elektrische Spannung verstanden, die ≤ 25 V und insbesondere ≤ 20 V bei Gleichspannung und/oder ≤ 30 V bei Wechselspannung und besonders vorzugsweise 0 V (bei Gleich- und Wechselspannung) beträgt.

Zur Erhöhung der Sicherheit kann vorzugsweise vorgesehen sein, dass nach der automatischen Unterbrechung des Hochspannungssystems eine Bestimmung der Spannungsfreiheit des Hochspannungssystems erfolgt. Dies kann durch eine oder mehrere Messeinrichtungen erfolgen, die vorzugsweise fahrzeugintern und insbesondere in eines oder beide der Steuergeräte integriert sind. Dabei kann vorgesehen sein, dass die Spannungsfreiheit automatisch protokoliert wird. Weiterhin kann vorgesehen sein, dass die Spannungsfreiheit, d.h. eine Spannung zwischen zwei definierten Messpunkten, die ≤ 25 V ist, auf mindestens einer Ausgabevorrichtung angezeigt wird, so dass diese ggf. zusätzlich manuell kontrolliert und ggf. protokolliert werden kann.

In einer weiterhin bevorzugten Ausführungsform des erfindungsgemäßen Verfahrens kann zusätzlich vorgesehen sein, dass vor der automatischen Unterbrechung eine Bestimmung des Anliegens von Hochspannung an dem Hochspannungssystem erfolgt. Dadurch kann vorab die Funktionsfähigkeit sowohl des Hochspannungssystems als auch der Messeinrichtungen überprüft werden.

Vorzugsweise erfolgt die Bestimmung der Spannungsfreiheit und/oder des Anliegens von Hochspannung durch mindestens zwei unabhängige Messeinrichtungen, um auch hier durch eine Redundanz eine Erhöhung der Prozesssicherheit zu erreichen. Besonders bevorzugt sind die beiden Messeinrichtungen in die (mindestens) zwei Steuersysteme integriert.

Vorzugsweise kann vorgesehen sein, dass das automaische Unterbrechen des Hochspannungssystems durch das Steuersystem manuell angefordert wird. Das Wartungspersonal kann somit den Zeitpunkt beeinflussen, zu dem eine automatische Spannungsfreischaltung erfolgen soll. Dabei kann besonders bevorzugt vorgesehen sein, dass die manuelle Anforderung nur unter bestimmten Voraussetzungen überhaupt möglich ist. Beispielsweise kann im Rahmen einer geführten Fehlersuche, wie sie im Rahmen der Wartung mittels Wartungsgeräten vorgenommen wird, eine manuelle Anforderung der automatischen Unterbrechung nur zu einem bestimmten Zeitpunkt, innerhalb eines definierten Zeitraums oder in Abhängigkeit von der Erledigung vorausgegangener Wartungsschritte möglich sein.

Die Erfindung betrifft weiterhin ein Verfahren zur Reaktivierung eines erfindungsgemäß deaktivierten Hochspannungssystems mit mindestens folgenden Verfahrensschritten:
- erstes Anfordern zum Schließen der Unterbrechung des Hochspannungssystems an dem zweiten Steuersystem;
- zweites Anfordern zum Schließen der Unterbrechung des Hochspannungssystems an dem ersten Steuersystem; und
- automatisches Schließen der Unterbrechung des Hochspannungssystems durch die Steuersysteme.

Dabei ist vorgesehen, dass beim ersten und/oder zweiten Anfordern ein Code, der bei der Deaktivierung erzeugt wurde, eingegeben werden muss, um zu dem automatischen Schließen der Unterbrechung des Hochspannungssystems zu führen.

Zur Erhöhung der Sicherheit ist auch bei der Reaktivierung des Hochspannungssystems vorgesehen, dass die zweite Anforderung zum Schließen der Unterbrechung des Hochspannungssystems innerhalb eines definierten Zeitraums (z.B. 30 Sekunden) nach der ersten Anforderung erfolgen muss, um zu dem automatischen Schließen der Unterbrechung des Hochspannungssystems zu führen.

In einer weiterhin bevorzugten Ausführungsform des erfindungsgemäßen Verfahrens kann dann vorgesehen sein, dass der Code bei der Deaktivierung des Hochspannungssystem auf einem temporär mit den Steuersystemen verbundenen Wartungsgerät ausgegeben und bei der Reaktivierung des Hochspannungssystems in das Wartungsgerät eingegeben und von diesem ggf. an das oder die Steuergeräte übertragen wird. Bei dem Wartungsgerät kann es sich insbesondere um ein solches handeln, dass heutzutage regelmäßig beim Service von Kraftfahrzeugen im Rahmen einer Software-geführten Fehlersuche eingesetzt wird.

Eine weitere Erhöhung der Sicherheit bei dem erfindungsgemäßen Verfahren kann erzielt werden, wenn das Wartungsgerät eine Reaktivierung des Hochspannungssystems nur in Abhängigkeit von dem Wartungszustand des Kraftfahrzeugs zulässt. Demnach kann das Wartungsgerät automatisch einen Wartungszustand des Kraftfahrzeugs prüfen, wobei ein automatisches Schließen der Unterbrechung des Hochspannungssystems in Abhängigkeit von dem Wartungszustand erfolgt. Insbesondere kann dabei vorgesehen sein, dass auch die Eingabe des bei der Deaktivierung ausgegebenen Codes zur Reaktivierung und/oder die doppelte Reaktivierungsanforderung nur dann zu einem tatsächlichen automatischen Schließen der Unterbrechung des Hochspannungssystems führt, wenn das Wartungsgerät eine Beendigung einer geführten Fehlersuche erkannt hat. Alternativ kann auch vorgesehen sein, dass die Eingabe des Codes mit dem Ziel der Reaktivierung des Hochspannungssystems nur möglich ist, wenn das Wartungsgerät eine Beendigung einer geführten Fehlersuche erkannt hat

Die Erfindung wird nachfolgend anhand eines in den Zeichnungen dargestellten Ausführungsbeispiels näher erläutert. In den Zeichnungen zeigt:
- Fig. 1:: in einem Diagramm wesentliche Merkmale des erfindungsgemäßen Verfahrens in einer Ausführungsform;
- Fig. 2:: in einem Diagramm wesentliche Schritte bei der Durchführung des erfindungsgemäßen Verfahrens gemäß Fig. 1;

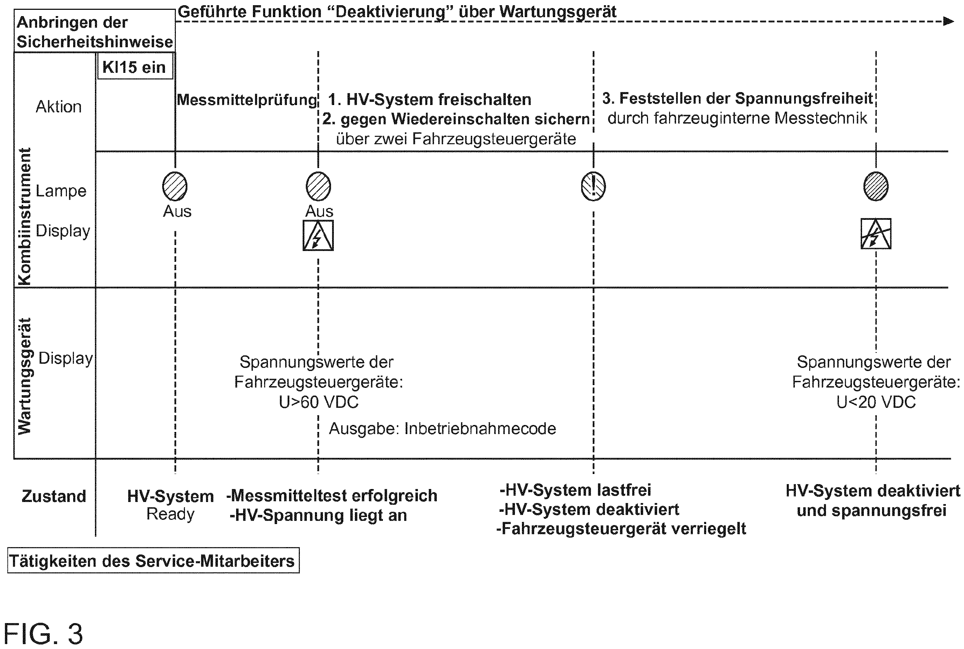

- Fig. 3:: die visuelle Rückmeldung bei der Deaktivierung des Hochspannungssystems im Rahmen des Verfahrens gemäß den Fig. 1 und 2; und

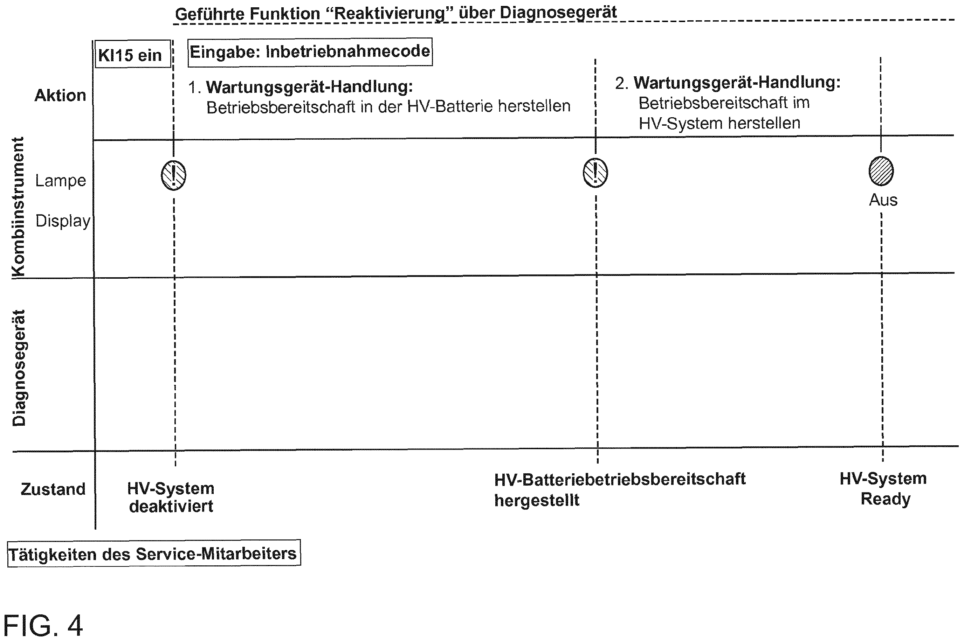

- Fig. 4:: die visuelle Rückmeldung bei der Reaktivierung des Hochspannungssystems im Rahmen des Verfahrens gemäß den Fig. 1 und 2.

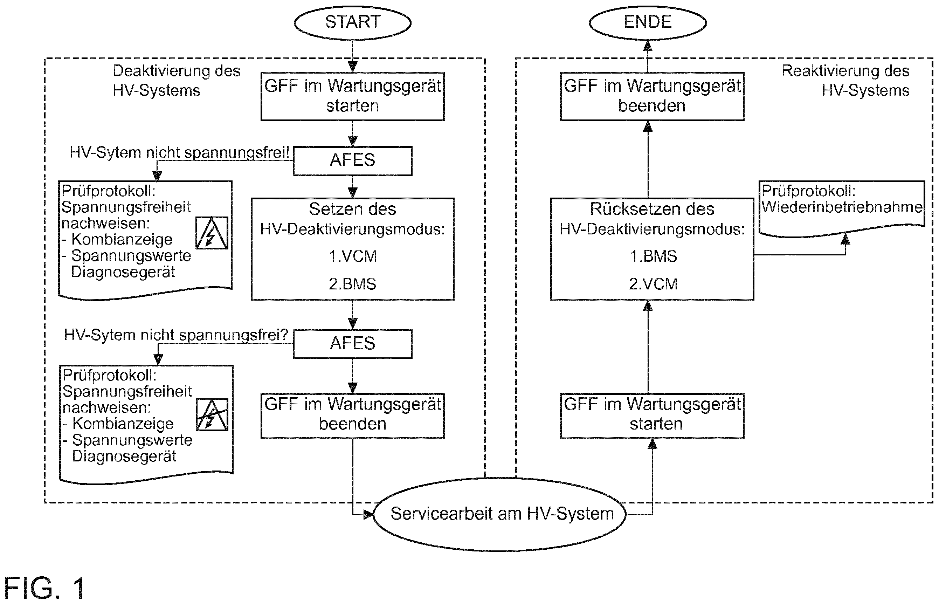

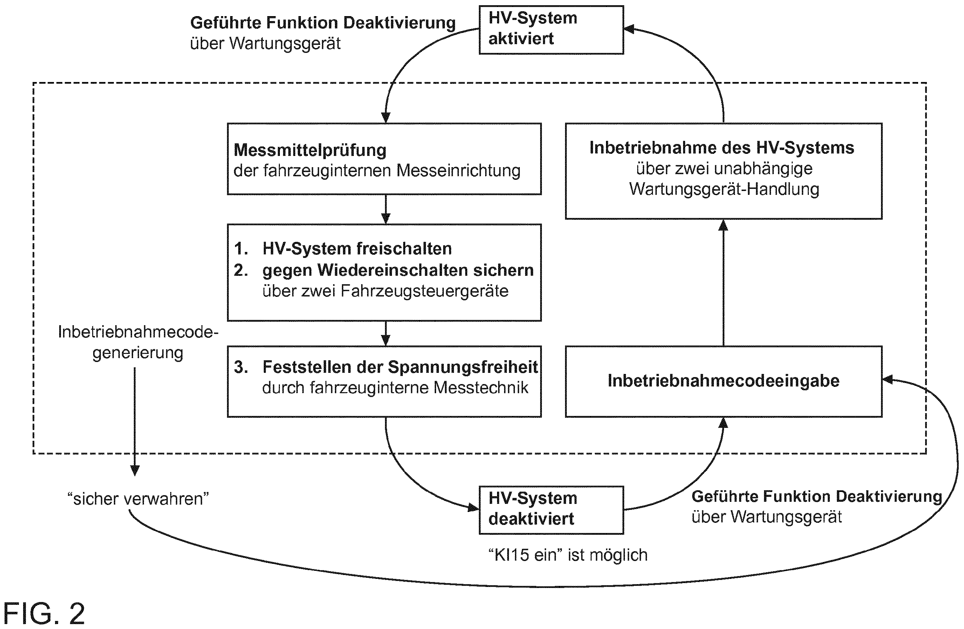

Die Fig. 1 und 2 zeigen in Diagrammen wesentliche Merkmale und konkrete Verfahrensschritte zur Deaktivierung und einer darauffolgenden Reaktivierung eines Hochspannungssystems ("HV-Systems") eines Kraftfahrzeugs.

Bei dem Hochspannungssystem (nicht dargestellt) handelt es sich um das Traktionsnetz eines elektrifizierten Kraftfahrzeugs. Dieses umfasst zumindest eine Hochspannungsquelle, wie insbesondere eine Hochspannungsbatterieeinheit oder eine Brennstoffzelle, sowie einen oder mehrere Hochspannungsverbraucher. Dies sind insbesondere ein oder mehrere elektrische Antriebsmotoren, gegebenenfalls ein elektrischer Klimakompressor und andere, mit Hochspannung betriebene Komforteinrichtungen und/oder Nebenaggregate, eine Leistungselektronik zur Steuerung der mit Hochspannung betriebenen Funktionselemente und gegebenenfalls ein Ladesystem, über das die Hochspannungsbatterieeinheit von einer externen elektrischen Energiequelle geladen werden kann. Weiterhin umfasst das Hochspannungssystem ein oder mehrere Schütze, die insbesondere elektromechanisch ausgebildet sein können, und von mindestens zwei Steuersystemen des Kraftfahrzeugs zum Schalten des Hochspannungssystems angesteuert werden können. In Abhängigkeit von dem Ansteuersignal sind die Schütze geöffnet, wodurch diese das Hochspannungssystem bzw. zumindest einen Stromkreis davon unterbrechen, oder sie sind geschlossen, wodurch diese das Hochspannungssystem nicht beeinflussen, d.h. nicht unterbrechen.

Bei dem ersten der Steuersysteme handelt es sich um eine Motorsteuerung und bei dem zweiten Steuersystem um das Batteriemanagementsystem des Kraftfahrzeugs. Beide Steuersysteme werden nicht mit Hochspannung sondern mit Niederspannung betrieben und sind hierzu in ein konventionelles, mit 12 V betriebenes Bordnetz des Kraftfahrzeugs integriert, wie dies auch von konventionellen, mit lediglich einem Verbrennungsmotor angetriebenen Kraftfahrzeugen bekannt ist.

Das Hochspannungssystem umfasst weiterhin noch mindestens eine Messeinrichtung, die eine qualitative (Hochspannung: ja/nein) und/oder quantitative (wertgenaue) Messung der an dem Hochspannungssystem anliegenden Spannung ermöglicht.

Die Deaktivierung des Hochspannungssystems erfolgt, indem zunächst das Hochspannungssystem eingeschaltet, d.h. unter Hochspannung gesetzt wird ("KI15 ein"). Hierzu wird das Kraftfahrzeug oder zumindest das Hochspannungssystem mittels eines "Zündschlüssels" oder einer sonstigen Starteinrichtung in den Betriebszustand versetzt. Daraufhin wird ein externes Wartungsgerät an einen dafür vorgesehenen Anschluss, der mit den beiden Steuersystemen verbunden ist, angeschlossen und in dem Wartungsgerät eine sogenannte "Geführte Fehlersuche" (GFF) von dem die Wartung durchführenden Personal gestartet. Bei der Geführten Fehlersuche werden von dem Wartungsgerät konkrete Wartungsschritte ausgegeben. Dabei kann auch eine Interaktion des Wartungspersonal mit dem Wartungsgerät erfolgen.

Der Start der Geführten Fehlersuche im Wartungsgerät löst die Messmittelprüfung aus. Das Ergebnis der dabei erfolgenden Spannungsprüfung ("AFES": Automatisches Feststellen der Spannungsfreiheit) wird zum einen auf dem Wartungsgerät in Form der konkret an den von der Messeinrichtung abgegriffenen Messstellen anliegenden Hochspannung, d.h. quantitativ angegeben; zum anderen erfolgt eine Anzeige in einem Display ("Kombiinstrument") in den Armaturen des Kraftfahrzeugs, wobei diese Anzeige lediglich qualitativ ist, d.h. mittels eines "Blitz"-Symbols wird angezeigt, ob Hochspannung anliegt oder nicht. Das Ergebnis der Messmittelprüfung wird zu Nachweiszwecken protokolliert. Dies kann automatisch oder manuell durch das Wartungspersonal erfolgen.

Sofern Hochspannung anliegt (Übereinstimmung der beiden Anzeigen; Normalfall), kann mittels des Wartungsgeräts manuell die automatische Unterbrechung des Hochspannungssystems angefordert werden ("Setzen des HV-Deaktivierungsmodus"). Dazu kann das Wartungsgerät im Rahmen der Geführten Fehlersuche auch auffordern. Das Setzen des HV-Deaktivierungsmodus erfolgt durch zwei manuelle, in einem definierten zeitlichen Abstand durch das Wartungspersonal erfolgende Anforderungen, wobei die erste Anforderung an den HV-Koordinator des Motorsteuergeräts ("VCU") und die zweite Anforderung an das Batteriemanagementsystem ("BMS") gerichtet ist. Nur wenn die zweite Anforderung innerhalb eines definierten Zeitraums (z.B. 30 Sekunden) nach der ersten Anforderung in das Wartungsgerät eingegeben wurde, erfolgt auch tatsächlich eine Unterbrechung des Hochspannungssystems, indem beide Steuersysteme die Schütze des Hochspannungssystems öffnen ("HV-System freischalten").

Ein wesentlicher Sicherheitsaspekt bei dem erfindungsgemäßen Verfahren liegt darin, dass das Hochspannungssystem nach der automatischen Unterbrechung gegen ein ungewolltes oder missbräuchliches Wiedereinschalten gesichert ist. Dies erfolgt durch eine Generierung eines Inbetriebnahmecodes durch zumindest eines der Steuersysteme, der von diesem an das Wartungsgerät übermittelt und dort ausgegeben, d.h. insbesondere temporär oder dauerhaft angezeigt oder andere Art und Weise ausgegeben wird. Alternativ kann der Inbetriebnahmecode aber auch durch das Wartungsgerät selbst generiert werden. Nach der Ausgabe des Inbetriebnahmecodes verriegeln die Steuersysteme, so dass eine Reaktivierung, d.h. ein Wiedereinschalten des Hochspannungssystems erst wieder möglich ist, wenn der Inbetriebnahmecode wieder in das Wartungsgerät eingegeben wird. Dabei kann als zusätzlich Bedingung für die Reaktivierung definiert sein, dass sämtliche Schritte der durch das Wartungsgerät geführten Fehlersuche abgeschlossen sind.

Zunächst einmal wird jedoch noch die Spannungsfreiheit des Hochspannungssystem positiv festgestellt, wobei hierbei unter Spannungsfreiheit eine Spannung von < 20 V (Gleichspannung) verstanden wird. Dies erfolgt wiederum durch die Messeinrichtung, wobei das Ergebnis davon wieder auf dem Wartungsgerät (quantitativ) und auf dem Kombiinstrument (qualitativ) dargestellt wird, so dass das Wartungspersonal deren Übereinstimmung manuell (visuell) feststellen kann bzw. muss. Zusätzlich kann eine automatische oder manuelle Protokollierung des Ergebnisses in dem Prüfprotokoll vorgesehen sein.

Daraufhin kann die Geführte Fehlersuche im Wartungsgerät beendet und die tatsächlichen Wartungsarbeiten an dem Hochspannungssystem ausgeführt werden. Alternativ können die Wartungsarbeiten aber auch ein Teil der Geführten Fehlersuche sein.

Nach der Beendigung der Wartungsarbeiten kann das Hochspannungssystem wieder reaktiviert werden. Hierzu wird wieder eine Geführte Fehlersuche gestartet (Alternative: auch die Reaktivierung erfolgt - wie die Deaktivierung und die Wartungsarbeiten - in einer einzigen Geführten Fehlersuche). Daraufhin erfolgt die manuelle Anforderung der Reaktivierung mittels des Wartungsgeräts ("Rücksetzen des HV-Deaktivierungsmodus"), wobei hierzu wiederum zwei manuelle Anforderungen erforderlich sind, die erneut in einem definierten zeitlichen Abstand an die zwei Steuersysteme (umgekehrte Reihenfolge wie bei der Deaktivierung) gestellt werden. Hierbei ist zumindest einmal die Eingabe des bei der Deaktivierung generierten Inbetriebnahmecodes erforderlich. Die Steuersysteme schließen dann automatisch die Schütze, wodurch die bei der Deaktivierung erfolgte Unterbrechung des Hochspannungssystems rückgängig gemacht, d.h. geschlossen wird. Die so erfolgte Wiederinbetriebnahme des Hochspannungssystems wird wiederum in dem Prüfprotokoll protokolliert und anschließend die Geführte Fehlersuche in dem Wartungsgerät beendet.

## Patentansprüche

1. Verfahren zur Deaktivierung eines elektrischen Hochspannungssystems eines Kraftfahrzeugs zur Durchführung von Wartungsarbeiten, mit den Schritten:
- Richten einer ersten Anforderung zum Unterbrechen des Hochspannungssystems an ein erstes Steuersystem;
- Richten einer zweiten Anforderung zum Unterbrechen des Hochspannungssystems an ein zweites Steuersystem;
- automatisches Unterbrechen des Hochspannungssystems durch mindestens eines der Steuersysteme, wobei das erste Steuersystem eine Motorsteuerung und das zweite Steuersystem ein Batteriemanagementsystem des Kraftfahrzeugs ist, und wobei das Richten der zweiten Anforderung innerhalb eines definierten Zeitraums nach dem Richten der ersten Anforderung erfolgen muss, um zu dem automatischen Unterbrechen des Hochspannungssystems zu führen.

2. Verfahren gemäß Anspruch 1, **dadurch gekennzeichnet, dass** nach der automatischen Unterbrechung eine Bestimmung der Spannungsfreiheit des Hochspannungssystems erfolgt.

3. Verfahren gemäß Anspruch 1 oder 2, **dadurch gekennzeichnet, dass** vor der automatischen Unterbrechung eine Bestimmung des Anliegens von Hochspannung an dem Hochspannungssystem erfolgt.

4. Verfahren gemäß Anspruch 2 oder 3, **dadurch gekennzeichnet, dass** die Bestimmung der Spannungsfreiheit und/oder des Anliegens von Hochspannung durch mindestens zwei Messeinrichtungen erfolgt.

5. Verfahren gemäß Anspruch 1 oder 2, **dadurch gekennzeichnet, dass** das Anfordern zur Unterbrechung des Hochspannungssystems manuell erfolgt.

6. Verfahren zur Reaktivierung eines gemäß einem Verfahren gemäß einem der vorhergehenden Ansprüche deaktivierten Hochspannungssystems mit den Schritten:
- erstes Anfordern zum Schließen der Unterbrechung des Hochspannungssystems an dem zweiten Steuersystem;
- zweites Anfordern zum Schließen der Unterbrechung des Hochspannungssystems an dem ersten Steuersystem; und
- automatisches Schließen der Unterbrechung des Hochspannungssystems durch die Steuersysteme,
wobei beim ersten und/oder zweiten Anfordern ein Code, der bei der Deaktivierung erzeugt wurde, eingegeben werden muss, um zu dem automatischen Schließen der Unterbrechung des Hochspannungssystems zu führen, und das zweite Anfordern innerhalb eines definierten Zeitraums nach dem ersten Anfordern erfolgen muss, um zu dem automatischen Schließen der Unterbrechung des Hochspannungssystems zu führen.

7. Verfahren gemäß Anspruch 6, **dadurch gekennzeichnet, dass** der Code bei der Deaktivierung des Hochspannungssystem auf einem temporär mit den Steuersystemen verbindbaren Wartungsgerät ausgegeben und bei der Reaktivierung des Hochspannungssystems in das Wartungsgerät eingegeben wird.

8. Verfahren gemäß Anspruch 7, **dadurch gekennzeichnet, dass** das Wartungsgerät einen Wartungszustand prüft, wobei ein automatisches Schließen der Unterbrechung des Hochspannungssystems nur bei Vorliegen eines definierten Wartungszustand erfolgt.

## Claims

1. Method for deactivating a high-voltage electrical system of a motor vehicle in order to perform maintenance work, comprising the steps of:
- directing a first request to disconnect the high-voltage system to a first control system;
- directing a second request to disconnect the high-voltage system to a second control system;
- automatically disconnecting the high-voltage system by at least one of the control systems, the first control system being an engine controller and the second control system being a battery management system of the motor vehicle, and the directing of the second request having to occur within a defined time period after the directing of the first request in order to lead to the automatic disconnection of the high-voltage system.

2. Method according to Claim 1, **characterized in that** the absence of voltage in the high-voltage system is determined after the automatic disconnection.

3. Method according to Claim 1 or 2, **characterized in that** the presence of high voltage in the high-voltage system is determined before the automatic disconnection.

4. Method according to Claim 2 or 3, **characterized in that** the absence of voltage and/or the presence of high voltage is determined by at least two measuring devices.

5. Method according to Claim 1 or 2, **characterized in that** the request to disconnect the high-voltage system is made manually.

6. Method for reactivating a high-voltage system deactivated according to a method according to any one of the preceding claims, comprising the steps of:
- first request to terminate the disconnection of the high-voltage system at the second control system;
- second request to terminate the disconnection of the high-voltage system at the first control system; and
- automatic termination of the disconnection of the high-voltage system by the control systems,
wherein, in the first and/or second requests, a code generated during deactivation has to be input in order to lead to the automatic termination of the disconnection of the high-voltage system, and the second request has to be made within a defined time period after the first request in order to lead to the automatic termination of the disconnection of the high-voltage system.

7. Method according to Claim 6, **characterized in that** the code is output during the deactivation of the high-voltage system on a maintenance device which can be temporarily connected to the control systems and is input into the maintenance device when the high-voltage system is reactivated.

8. Method according to Claim 7, **characterized in that** the maintenance device checks a maintenance state, the disconnection of the high-voltage system being automatically terminated only if a defined maintenance state is present.

## Revendications

1. Procédé permettant de désactiver un système électrique haute tension d'un véhicule automobile pour la réalisation de travaux de maintenance, comprenant les étapes de :
- adressage d'une première demande d'interruption du système haute tension à un premier système de commande ;
- adressage d'une deuxième demande d'interruption du système haute tension à un deuxième système de commande ;
- interruption automatique du système haute tension par au moins un des systèmes de commande, le premier système de commande étant une commande de moteur et le deuxième système de commande étant un système de gestion de batteries du véhicule automobile et l'adressage de la deuxième demande devant être effectué dans une période de temps définie après l'adressage de la première demande pour entraîner l'interruption automatique du système haute tension.

2. Procédé selon la revendication 1, **caractérisé en ce que**, après l'interruption automatique, une détermination de l'absence de tension dans le système haute tension est effectuée.

3. Procédé selon la revendication 1 ou 2, **caractérisé en ce que**, avant l'interruption automatique, une détermination de la présence de haute tension dans le système haute tension est effectuée.

4. Procédé selon la revendication 2 ou 3, **caractérisé en ce que** la détermination de l'absence de tension et/ou de la présence de haute tension est effectuée par au moins deux dispositifs de mesure.

5. Procédé selon la revendication 1 ou 2, **caractérisé en ce que** la demande d'interruption du système haute tension est effectuée manuellement.

6. Procédé permettant de réactiver un système haute tension désactivé selon un procédé selon l'une quelconque des revendications précédentes comprenant les étapes de :
- première demande de clôture de l'interruption du système haute tension au deuxième système de commande ;
- deuxième demande de clôture de l'interruption du système haute tension au premier système de commande ; et
- clôture automatique de l'interruption du système haute tension par les systèmes de commande,
un code qui a été généré lors de la désactivation devant être saisi lors de la première et/ou la deuxième demande, pour entraîner la clôture automatique de l'interruption du système haute tension et la deuxième demande devant être effectuée dans une période de temps définie après la première demande pour entraîner la clôture automatique de l'interruption du système haute tension.

7. Procédé selon la revendication 6, **caractérisé en ce que** le code est sorti sur un appareil de maintenance pouvant être connecté temporairement aux systèmes de commande lors de la désactivation du système haute tension et est entré dans l'appareil de maintenance lors de la réactivation du système haute tension.

8. Procédé selon la revendication 7, **caractérisé en ce que** l'appareil de maintenance contrôle un état de maintenance, une clôture automatique de l'interruption du système haute tension n'étant effectuée que dans le cas de la présence d'un état de maintenance défini.
